Europäisches Patentamt

European Patent Office

Office européen des brevets

(19)

(11) Veröffentlichungsnummer: **0 447 876 A1**

## EUROPÄISCHE PATENTANMELDUNG

(21) Anmeldenummer: 91103369.4

(22) Anmeldetag: 06.03.91

(51) Int. Cl.5: **B32B 11/04**

(30) Priorität: 17.03.90 DE 9003168 U

(43) Veröffentlichungstag der Anmeldung:
25.09.91 Patentblatt 91/39

(84) Benannte Vertragsstaaten:
AT BE CH DE DK ES FR GB GR IT LI LU NL SE

(71) Anmelder: **Dr. Kohl GmbH & Cie Dachbelag-
und Bautenschutzmittel-Fabrik**
**Auf dem Beerenkamp 2**
**W-4270 Dorsten 1(DE)**

(72) Erfinder: **Schult, Kurt**
**Hardtstrasse 190**
**W-4270 Dorsten 1(DE)**

(74) Vertreter: **Spalthoff, Adolf, Dipl.-Ing. et al**
**Pelmanstrasse 31 Postfach 34 02 20**
**W-4300 Essen 1(DE)**

(54) Bitumenschweissbahn zur Verwendung in Brückenbauwerken.

(57) Eine Bitumenschweißbahn, die insbesondere zur Verwendung in Brückenbauwerken dient, ist mit einer Trägerschicht und mit diese umgebenden Bitumendeckschichten versehen.

Um ein Ausbluten der Bitumenschweißbahn nach oben hin beim Aufbringen des zur Ausbildung der Fahrbahn erforderlichen Gußasphalts zu verhindern und um sicherzustellen, daß die Bitumenschweißbahn auch bei vergleichsweise niedrigen Temperaturen eine verhältnismäßig hohe Elastizität aufweist, ist oberhalb der Trägerschicht (4) eine Plastomerbitumendeckschicht (5) und unterhalb der Trägerschicht (4) eine Elastomerbitumendeckschicht (2) angeordnet.

EP 0 447 876 A1

Die Erfindung bezieht sich auf eine Bitumenschweißbahn nach dem Oberbegriff des Schutzanspruchs 1.

Es ist bekannt, bei Brückenbauwerken zum Schutz von unterhalb der Fahrbahn angeordneten, aus armiertem Beton hergestellten Bauwerksteilen vor Feuchtigkeit etc. zwischen diesen Bauwerksteilen und der Fahrbahn Bitumenschweißbahnen anzuordnen. Diese sollen verhindern, daß Regen, Schnee, Tausalzlösungen etc. in die eisenarmierten Bauwerksteile eindringen und so langfristig eine Verschlechterung der Festigkeitseigenschaften dieser Bauwerksteile herbeiführen.

Derartige Bitumenschweißbahnen sind herkömmlicherweise dreischichtig aufgebaut. Eine Trägerschicht dieser Bitumenschweißbahnen ist oben und unten entweder von einer Elastomerbitumendeckschicht oder einer Plastomerbitumendeckschicht abgedeckt. Bei ersterer Ausführung erweist es sich als nachteilig, daß diese nicht die erforderliche Wärmestandsfestigkeit gegenüber dem zur Ausbildung der Fahrbahn aufzubringenden Gußasphalt aufweist, während bei der zweiten Ausführung es an der, insbesondere bei vergleichsweise niedrigen Temperaturen, erforderlichen Elastizität mangelt.

Der Erfindung liegt die Aufgabe zugrunde, eine gattungsgemäße Bitumenschweißbahn zu schaffen, bei der nicht nur ein Ausbluten derselben nach oben hin beim Aufbringen des zur Ausbildung der Fahrbahn erforderlichen Gußasphalts verhindert wird, sondern welche auch bei vergleichweise niedrigen Temperaturen eine verhältnismäßig hohe Elastizität aufweist.

Diese Aufgabe wird erfindungsgemäß durch die Merkmale im kennzeichnenden Teil des Schutzanspruchs 1 gelöst. Die oberhalb der Trägerschicht angeordnete Plastomerbitumendeckschicht weist einen Erweichungspunkt von mindestens 150 Grad C auf, ermittelt nach der Prüfmethode "Ring und Kugel". Diese Erweichungstemperatur ist ausreichend hoch, um zu verhindern, daß die Bitumenschweißbahn ausblutet. Die unterhalb der Trägerschicht angeordnete Elastomerbitumendeckschicht sichert die für die Bitumenschweißbahn bei niedrigen Temperaturen erforderliche Elastizität.

Eine weitere Erhöhung der Stabilität der Bitumenschweißbahn ergibt sich, wenn gemäß Schutzanspruch 2 zwischen der Trägerschicht und der Elastomerbitumendeckschicht eine zweite Plastomerbitumendeckschicht angeordnet ist.

Eine besonders vorteilhafte Ausgestaltung der Trägerschicht ergibt sich aus Schutzanspruch 3.

Zum Schutz der Bitumenschweißbahn kann in herkömmlicher Weise unterhalb der Elastomerbitumendeckschicht gemäß Schutzanspruch 4 eine Trennschicht aus PE-Folie oder Talkum angeordnet werden.

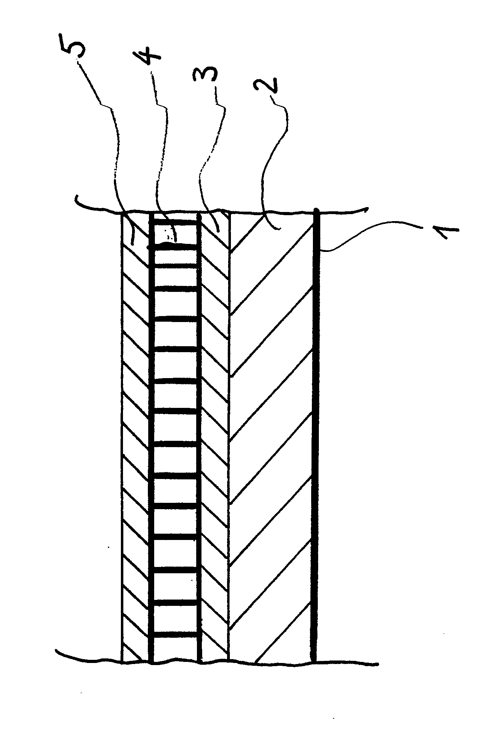

Im folgenden wird die Erfindung an Hand einer Ausführungsform unter Bezugnahme auf die stark vergrößerte Darstellung in der Zeichnung erläutert.

Die Zeichnung zeigt einen Schnitt durch einen Teil der erfindungsgemäßen Bitumenschweißbahn, wobei die gezeigte Ausführungsform einen vierschichtigen Aufbau aufweist. Von oben nach unten besteht die Bitumenschweißbahn aus einer ersten Plastomerbitumendeckschicht 5, die unmittelbar an den die Fahrbahn ausbildenden, nicht dargestellten Gußasphalt angrenzt. Diese Plastomerbitumendeckschicht 5 ist ca. 0,6 mm dick. Ihr Erwichungspunkt beträgt mindestens 150 Grad C.

Unterhalb der ersten Plastomerbitumendeckschicht 5 ist eine Trägerschicht 4 angeordnet. Diese besteht aus einem Polyestervlies. Dieses Polyestervlies ist mit einem Polymerbitumen, insbesondere einem Plastomerbitumen, imprägniert. Die Trägerschicht ist ca. 1,0 mm dick.

Unterhalb der Trägerschicht 4 ist eine zweite Plastomerbitumendeckschicht 3 vorgesehen, die in ihrer Zusammensetzung und in ihrer Dicke der ersten Plastomerbitumendeckschicht 5 entsprechen kann.

Unterhalb dieser zweiten Plastomerbitumendeckschicht 3 ist eine Elastomerbitumendecksicht 2 angeordnet, die der Bitumenschweißbahn die erforderliche Kälteelastizität gibt. Diese Elastomerbitumendeckschicht 2 ist etwa 2,5 mm dick.

Unterhalb der Elastomerbitumendeckschicht 2 ist in herkömmlicher Weise eine Trennschicht 1 aus einer PE-Folie oder Talkum angeordnet.

## Patentansprüche

1. Bitumenschweißbahn, insbesondere zur Verwendung in Brückenbauwerken, mit einer Trägerschicht und diese umgebenden Bitumendeckschichten, dadurch gekennzeichnet, daß oberhalb der Trägerschicht (4) eine plastomerbitumendeckschicht (5) und unterhalb der Trägerschicht (4) eine Elastomerbitumendeckschicht (2) angeordnet ist.

2. Bitumenschweißbahn nach Anspruch 1, dadurch gekennzeichnet, daß zwischen der Trägerschicht (4) und der Elastomerbitumendeckschicht (2) eine zweite Plastomerbitumendeckschicht (3) angeordnet ist.

3. Bitumenschweißbahn nach Anspruch 1 oder 2, dadurch gekennzeichnet, daß die Trägerschicht (4) aus einer aus Polyestervlies hergestellten Trägereinlage und einer auf Polymerbitumen-Basis, insbesondere Plastomerbitumen-Basis, hergestellten Imprägniermasse besteht.

4. Bitumenschweißbahn nach einem der Ansprüche 1 bis 3, dadurch gekennzeichnet, daß unterhalb der Elastomerbitumendeckschicht (2) eine Trennschicht (1) aus einer PE-Folie oder Talkum angeordnet ist.

## EINSCHLÄGIGE DOKUMENTE

EP 91103369.4

| Kategorie | Kennzeichnung des Dokuments mit Angabe, soweit erforderlich, der maßgeblichen Teile | Betrifft Anspruch | KLASSIFIKATION DER ANMELDUNG (Int Cl⁵) |
|---|---|---|---|
| A | EP - A2/A3 - 0 287 078<br>(DR. KOHL GMBH & CIE)<br>  * Zusammenfassung; Fig. 1;<br>    Spalte 1, Zeilen 6-8 *<br>  -- | 1 | B 32 B 11/04 |
| A | US - A - 4 891 272<br>(CIACCIA)<br>  * Spalte 1, Zeilen 6-19; Zu-<br>    sammenfassung *<br>  -- | 1-3 | |
| A | DE - A1 - 3 148 365<br>(MAGYAR)<br>  * Zusammenfassung *<br>  -- | 1-4 | |
| A | CH - A5 - 666 224<br>(TAJIMA ROOFING)<br>  *. Zusammenfassung; Anspruch<br>    7 *<br>  ---- | 1,3,4 | |

RECHERCHIERTE SACHGEBIETE (Int Cl⁵)

B 32 B 11/00

Der vorliegende Recherchenbericht wurde für alle Patentansprüche erstellt.

| Recherchenort | Abschlußdatum der Recherche | Prüfer |
|---|---|---|
| WIEN | 12-06-1991 | ONDER |